# EUROPÄISCHE PATENTANMELDUNG

(11) **EP 4 371 958 A1**
(43) Veröffentlichungstag der Anmeldung: **22.05.2024**
(21) Anmeldenummer: 22207789.3
(22) Anmeldetag: 16.11.2022
(51) Int. Cl.: C04B 28/00, C04B 28/04, C04B 28/14

(54) **TROCKENPRÄPARATIONEN FÜR BESCHICHTUNGSMASSEN, WÄSSRIGE ZUBEREITUNGSMASSEN, UMFASSEND DIE TROCKENPRÄPARATIONEN, SUBSTRATE, GEBILDET AUS DER WÄSSRIGEN ZUBEREITUNGSMASSE, UND WANDAUFBAU BZW. BAUKÖRPER, UMFASSEND DAS SUBSTRAT**

(71) Anmelder: DAW SE, 64372 Ober-Ramstadt (DE)
(72) Erfinder: Hurnaus, Thomas, 84559 Krainburg (DE); Putivtsev, Mikhail, 36199 Rotenburg (DE); Fleischmann, Konstantin, 99817 Eisenach (DE)
(74) Vertreter: Metten, Karl-Heinz

(57) **Zusammenfassung**

Die vorliegende Erfindung betrifft eine Trockenpräparation für eine Beschichtungsmasse, umfassend Zement in einer Menge kleiner 1,25 Gew.-%, bevorzugt in einer Menge kleiner 1,0 Gew.-%, Tone in einer Menge im Bereich von 5 bis 60 Gew.-%, mindestens ein Körnungsmaterial, Additive und Aktivatoren. Ferner betrifft die Erfindung eine wässrige Zubereitungsmasse gebildet aus der erfindungsgemäßen Trockenpräparation. Außerdem betrifft die Erfindung ein Substrat gebildet aus der wässrigen Zubereitungsmasse sowie einen Wandaufbau oder Baukörper, umfassend das Substrat. Schließlich betrifft die Erfindung die Verwendung der wässrigen Zubereitungsmasse als Unterputzmasse, als Oberputzmasse oder als Klebermasse.

## Beschreibung

Die vorliegende Erfindung betrifft Trockenpräparationen für Beschichtungsmassen, wässrige Zubereitungsmassen, insbesondere wässrige Putzbeschichtungsmassen, umfassend die oder gebildet aus den erfindungsgemäßen Trockenpräparationen, und Substrate, insbesondere Putzbeschichtungen, gebildet aus der erfindungsgemäßen wässrigen Zubereitungsmasse. Ferner betrifft die Erfindung einen Wandaufbau sowie einen Baukörper, insbesondere ein Wärmedämmverbundsystem, umfassend mindestens ein erfindungsgemäßes Substrat.

Nicht zuletzt aufgrund einer zunehmenden Sensibilisierung der Öffentlichkeit zu dem Thema der kohlendioxidgetriebenen globalen Erwärmung gibt es bereits seit längerer Zeit Bestrebungen, den Zementanteil in hydraulischen Bindemittelmassen zu verringern. Allein in Deutschland fielen im Jahr 2017 pro Tonne Zement 803 kg CO₂ an (Quelle: (DEHSt), D.E., Treibhausgasemissionen 2017 - Emissionshandelspflichtige stationäre Anlagen und Luftverkehr in Deutschland (VET-Bericht 2017), 2018, Berlin). Beispielsweise enthalten gängige Trockenmörtelformulierungen für Klebe- und Armierungsmassen etwa 20 bis 40 Gew.-% Zement. Pro Tonne einer solchen Trockenmörtelformulierung gehen allein auf deren Zementanteil CO₂-Emissionen im Bereich von 160 bis 320 kg zurück.

Es hat demgemäß bereits vielfältige Anstrengungen gegeben, den Zementanteil in Trockenmörtelformulierungen zu reduzieren. Beispielsweise wird in der EP 3 162 777 B1 vorgeschlagen, Zement vollständig durch Hüttensand zu substituieren. Allerdings ist die Verfügbarkeit von Hüttensand begrenzt, sodass der Bedarf an Substitutionsprodukten nicht ansatzweise befriedigt werden kann.

Die Lösungsansätze des Stands der Technik lassen noch stets Wünsche offen. Der vorliegenden Erfindung hat daher die Aufgabe zugrunde gelegen, Trockenmörtelformulierungen, die nur noch einen stark reduzierten Anteil an Zement aufweisen, verfügbar zu machen, die nicht mehr mit den Nachteilen des Stands der Technik behaftet sind und die insbesondere Formkörper bzw. Beschichtungen liefern, die in ihren physikalischen Eigenschaften an Formkörper und Beschichtungen aus herkömmlichen Zement-basierten Trockenmörtelformulierungen, beispielsweise hinsichtlich Haftzugfestigkeit, Biegezugfestigkeit, Druckfestigkeit, Schwindverhalten und/oder kapillarer Wasseraufnahme, insbesondere hinsichtlich Haftzugsfestigkeit, heranreichen.

Demgemäß wurde eine Trockenpräparation für eine Beschichtungsmasse gefunden, umfassend oder bestehend aus
a) Zement, insbesondere umfassend oder bestehend aus Zement gemäß DIN EN 197-1:2011-11, in einer Menge kleiner 1,25 Gew.-% oder kleiner 1,0 Gew.-%, bevorzugt im Bereich von 0,25 bis 1,1 Gew.-% und besonders bevorzugt im Bereich von 0,4 bis kleiner 1,0 Gew.-%, bezogen auf das Gesamtgewicht der Trockenpräparation,
b) calcinierten Tonen in einer Menge im Bereich von 5 bis 60 Gew.-%, bezogen auf das Gesamtgewicht der Trockenpräparation,
c) Aktivatoren, umfassend
   i) mindestens ein Erdalkalihydroxid, insbesondere Calciumhydroxid, und Calciumsulfat (Anhydrit), Calciumsulfat-Hemihydrat und/oder Calciumsulfat-Dihydrat, insbesondere Calciumsulfat (Anhydrit), oder
   ii) mindestens ein Erdalkalihydroxid, insbesondere Calciumhydroxid, und mindestens eine Aktivatorverbindung ausgewählt aus der Gruppe bestehend aus Calciumchlorid, Calciumnitrat, Calciumformiat, Calciumacetat, Calciumhydrogencarbonat, Calciumbromid, Calciumsulfamat, Calciumoxid, Calciumiodid, Calciumlactat, Calciumpropionat, Calciummethansulfonat, Calciumsilikathydrat, Calciumaluminat, Lithiumcarbonat, Lithiumsulfat, Lithiumacetat, Lithiumsilikat, Natriumcarbonat, Natriumsulfat, Natriumsilikat, Natriumaluminat, Kaliumchlorid, Kaliumsilikat, Aluminiumsulfat und Mischungen hiervon, insbesondere Calciumformiat, oder
   iii) Calciumsulfat (Anhydrit), Calciumsulfat-Hemihydrat und/oder Calciumsulfat-Dihydrat, insbesondere Calciumsulfat (Anhydrit), und mindestens eine Aktivatorverbindung ausgewählt aus der Gruppe bestehend aus Calciumchlorid, Calciumnitrat, Calciumformiat, Calciumacetat, Calciumhydrogencarbonat, Calciumbromid, Calciumsulfamat, Calciumoxid, Calciumiodid, Calciumlactat, Calciumpropionat, Calciummethansulfonat, Calciumsilikathydrat, Calciumaluminat, Lithiumcarbonat, Lithiumsulfat, Lithiumacetat, Lithiumsilikat, Natriumcarbonat, Natriumsulfat, Natriumsilikat, Natriumaluminat, Kaliumchlorid, Kaliumsilikat, Aluminiumsulfat und Mischungen hiervon, insbesondere Calciumformiat, oder
   iv) mindestens ein Erdalkalihydroxid, insbesondere Calciumhydroxid, mindestens eine Aktivatorverbindung ausgewählt aus der Gruppe bestehend aus Calciumchlorid, Calciumnitrat, Calciumformiat, Calciumacetat, Calciumhydrogencarbonat, Calciumbromid, Calciumsulfamat, Calciumoxid, Calciumiodid, Calciumlactat, Calciumpropionat, Calciummethansulfonat, Calciumsilikathydrat, Calciumaluminat, Lithiumcarbonat, Lithiumsulfat, Lithiumacetat, Lithiumsilikat, Natriumcarbonat, Natriumsulfat, Natriumsilikat, Natriumaluminat, Kaliumchlorid, Kaliumsilikat, Aluminiumsulfat und Mischungen hiervon, insbesondere Calciumformiat, und Calciumsulfat (Anhydrit), Calciumsulfat-Hemihydrat und/oder Calciumsulfat-Dihydrat, insbesondere Calciumsulfat (Anhydrit),
d) mindestens einem Körnungsmaterial und
e) mindestens einem Additiv,
   wobei die die Trockenpräparation bildenden Komponenten sich stets zu 100,0 Gew.-% addieren.

In einer weiteren Ausführungsform kann vorgesehen sein, dass die Trockenpräparation für eine Beschichtungsmasse umfasst
a) Zement, umfassend Zement gemäß DIN EN 197-1:2011-11 in einer Menge kleiner 1,25 Gew.-% oder kleiner 1,0 Gew.-%, bevorzugt im Bereich von 0,25 bis 1,1 Gew.-% und besonders bevorzugt im Bereich von 0,4 bis kleiner 1,0 Gew.-%, bezogen auf das Gesamtgewicht der Trockenpräparation,
b) calcinierte Tone in einer Menge im Bereich von 5 bis 60 Gew.-%, bezogen auf das Gesamtgewicht der Trockenpräparation,
c) Aktivatoren, umfassend
   i) Calciumhydroxid und Calciumsulfat (Anhydrit), Calciumsulfat-Hemihydrat und/oder Calciumsulfat-Dihydrat, insbesondere Calciumsulfat (Anhydrit), oder
   ii) Calciumhydroxid und mindestens eine Aktivatorverbindung ausgewählt aus der Gruppe bestehend aus Calciumchlorid, Calciumnitrat, Calciumformiat, Calciumacetat, Calciumhydrogencarbonat, Calciumbromid, Calciumsulfamat, Calciumoxid, Calciumiodid, Calciumlactat, Calciumpropionat, Calciummethansulfonat, Calciumsilikathydrat, Calciumaluminat, Lithiumcarbonat, Lithiumsulfat, Lithiumacetat, Lithiumsilikat, Natriumcarbonat, Natriumsulfat, Natriumsilikat, Natriumaluminat, Kaliumchlorid, Kaliumsilikat, Aluminiumsulfat und Mischungen hiervon, insbesondere Calciumformiat, oder
   iii) Calciumsulfat (Anhydrit), Calciumsulfat-Hemihydrat und/oder Calciumsulfat-Dihydrat, insbesondere Calciumsulfat (Anhydrit), und mindestens eine Aktivatorverbindung ausgewählt aus der Gruppe bestehend aus Calciumchlorid, Calciumnitrat, Calciumformiat, Calciumacetat, Calciumhydrogencarbonat, Calciumbromid, Calciumsulfamat, Calciumoxid, Calciumiodid, Calciumlactat, Calciumpropionat, Calciummethansulfonat, Calciumsilikathydrat, Calciumaluminat, Lithiumcarbonat, Lithiumsulfat, Lithiumacetat, Lithiumsilikat, Natriumcarbonat, Natriumsulfat, Natriumsilikat, Natriumaluminat, Kaliumchlorid, Kaliumsilikat, Aluminiumsulfat und Mischungen hiervon, insbesondere Calciumformiat, oder
   iv) Calciumhydroxid, mindestens eine Aktivatorverbindung ausgewählt aus der Gruppe bestehend aus Calciumchlorid, Calciumnitrat, Calciumformiat, Calciumacetat, Calciumhydrogencarbonat, Calciumbromid, Calciumsulfamat, Calciumoxid, Calciumiodid, Calciumlactat, Calciumpropionat, Calciummethansulfonat, Calciumsilikathydrat, Calciumaluminat, Lithiumcarbonat, Lithiumsulfat, Lithiumacetat, Lithiumsilikat, Natriumcarbonat, Natriumsulfat, Natriumsilikat, Natriumaluminat, Kaliumchlorid, Kaliumsilikat, Aluminiumsulfat und Mischungen hiervon, insbesondere Calciumformiat, und Calciumsulfat (Anhydrit), Calciumsulfat-Hemihydrat und/oder Calciumsulfat-Dihydrat, insbesondere Calciumsulfat (Anhydrit),
d) mindestens ein Körnungsmaterial und
e) mindestens ein Additiv,
wobei die die Trockenpräparation bildenden Komponenten sich stets zu 100,0 Gew.-% addieren.

Geeignete Zemente umfassen insbesondere solche nach DIN EN 197-1:2011-11, beispielsweise Portlandzement, Trasszement und/oder Hüttenzement.

Tone als Basis bzw. Ausgangsmaterial für calcinierte Tone umfassen einerseits Minerale, die überwiegend feinstkörnig sind, z.B. eine Korngröße < 2 µm aufweisen, und die keine Schichtsilikate darstellen müssen, z.B. Goethit und Gibbsit, sowie andererseits Schichtsilikate, deren Korngröße auch größer oder gleich 2 µm sein kann, z.B. Kaolinit. Im Sinne der vorliegenden Erfindung sollen unter Tone vor allem anorganische Materialien aus Tonmineralen verstanden werden, bei denen die Mineralpartikel eine durchschnittliche Partikelgröße kleiner 20 µm aufweisen und bei denen der silikatische Tonmineralanteil über eine durchschnittliche Partikelgröße kleiner 2 µm verfügt (siehe zum Beispiel K. Jasmund, g. Lagaly G, H.M. Köster, E.E. Kohler, M. Müller-Vonmoos, E.A. Niederbudde et al., "Tonminerale und Tone: Struktur, Eigenschaften, Anwendungen und Einsatz in Industrie und Umwelt", Darmstadt, Dr. Dietrich Steinkopff Verlag, 1993).

Besonders bevorzugt wird auf Tone als Ausgangsprodukte für calcinierte Tone mit einem hohen Schichtsilikatanteil, z.B. größer oder gleich 75 Gew.-% oder 85 Gew.-% oder darüber, zurückgegriffen. Schichtsilikate können nach ihrer Struktur regelmäßig in Zweischichtsilikate (z.B. Kaolinit, Serpentin-Gruppe), Dreischichtsilikate (z.B. Glimmer, Illit, Smectit, Montmorillonit) und Vierschichtsilikate (z.B. Chlorit-Gruppe) unterschieden werden. Der Aufbau von Schichtsilikaten basiert auf Silicium-(SiO₄-) Tetraeder- und Aluminium-(AlO₆-) bzw. Magnesium-(MgO₆-) Oktaeder-Schichten.

Die calcinierten Tone auf Basis von Zweischichtsilikaten umfassen insbesondere Schichtsilikate der Kaolin- und/oder Serpentin-Gruppe, die calcinierten Tone auf Basis von Dreischichtsilikaten insbesondere Glimmer, Illit, Smectit und/oder Montmorillonit, und die calcinierten Tone auf Basis von Vierschichtsilikaten insbesondere Schichtsilikate der Chlorit-Gruppe.

Besonders bevorzugt unter den calcinierten Tonen ist das aus dem Zweischichtsilikat Kaolinit erhaltene Metakaolin. Hierbei handelt es sich um einen reinphasigen calcinierten Ton. Ebenfalls geeignet als reinphasige calcinierte Tone sind u.a. Metaillit und Metamuskovit. Selbstverständlich können erfindungsgemäß auch beliebige Mischungen an calcinierten Tonen bzw. mehrphasigen Tonen zum Einsatz kommen.

Die Calcinierung von Tonen findet regelmäßig bei Temperaturen im Bereich von 550 °C bis 850 °C statt, wobei solche calcinierten Tone bevorzugt sind, die bei Temperaturen unterhalb der Sintertemperatur thermisch behandelt wurden. Ohne an eine Theorie gebunden zu sein, wird davon ausgegangen, dass beim Calcinieren die OH-Banden an den Oktaederschichten abgespalten werden. Dieser Vorgang kann auch als Dehydroxylierung bezeichnet werden. Calcinierungsverfahren sind dem Fachmann im Allgemeinen bekannt. Beispielsweise wird bei der sogenannten Flash-Calcinierung der Ton während einer kurzen Verweilzeit von etwa ein bis zwei Sekunden der Calcinierungstemperatur ausgesetzt.

Calcinierte Tone verfügen regelmäßig über puzzolane Eigenschaften und können demgemäß als latent hydraulische Bindemittel aufgefasst werden.

Besonders zuverlässig wird die der Erfindung zugrunde liegende Aufgabe auch durch solche Trockenpräparationen gelöst, in denen die darin vorliegenden calcinierten Tone einen D50-Wert im Bereich von 25 bis 125 µm, bevorzugt im Bereich von 50 bis 100 µm, aufweisen. Dies trifft insbesondere auch auf calcinierte Tone zu, die zusätzlich über einen D90-Wert im Bereich von 400 bis 1500 µm, bevorzugt im Bereich von 750 bis 1250 µm sowie alternativ und insbesondere kumulativ über einen D10-Wert im Bereich von 1 bis 20 µm, bevorzugt im Bereich von 2 bis 10 µm, verfügen. Gemäß einer weiteren zweckmäßigen Ausführungsform kommen auch solche Trockenpräparationen bevorzugt zum Einsatz, in denen die darin vorliegenden calcinierten Tone einen D50-Wert im Bereich von 2 bis 20 µm, bevorzugt im Bereich von 4 bis 15 µm, aufweisen. Dies trifft insbesondere auch auf calcinierte Tone zu, die zusätzlich über einen D90-Wert im Bereich von 100 bis 300 µm, bevorzugt im Bereich von 150 bis 250 µm, sowie alternativ und insbesondere kumulativ über einen D10-Wert im Bereich von 0,5 bis 10 µm, bevorzugt im Bereich von 1 bis 5 µm, verfügen.

Für die Bestimmung der D10-, D50- und D90-Werte kann auf die Vorschrift gemäß DIN ISO 9276-1:2004-09 (Darstellung der Ergebnisse von Partikelgrößenanalysen - Teil 1: grafische Darstellung) und ISO 9276-2:2014-05 (Darstellung der Ergebnisse von Partikelgrößenanalysen - Teil 2: Berechnung von mittleren Partikelgrößen/-durchmessern und Momenten aus Partikelgrößenverteilungen) zurückgegriffen werden.

Die calcinierten Tone liegen in den erfindungsgemäßen Trockenpräparationen in einer Menge im Bereich von 5 bis 60 Gew.-%, bezogen auf das Gesamtgewicht der Trockenpräparation, vor. Bevorzugt liegen die calcinierten Tone, d. h. die Komponente b), in diesen Trockenpräparationen, insbesondere calcinierte Tone auf Basis von Kaolinit und/oder Montmorillonit, in einer Menge im Bereich von 5 bis 50 Gew.-%, besonders bevorzugt im Bereich von 10 bis 40 Gew.-% und insbesondere im Bereich von 15 bis 35 Gew.-%, jeweils bezogen auf das Gesamtgewicht der Trockenpräparation, vor.

Bevorzugt wird in einer Ausführungsform für die Komponente c) ("Aktivatoren") zurückgegriffen auf Calciumhydroxid, und Calciumsulfat (Anhydrit), Calciumsulfat-Hemihydrat und/oder Calciumsulfat-Dihydrat, insbesondere auf Calciumhydroxid und Calciumsulfat (Anhydrit). In einer weiteren bevorzugten Ausführungsform kommen als Komponente c) Calciumhydroxid und Calciumformiat in den erfindungsgemäßen Trockenpräparationen zum Einsatz. In einer noch weiteren bevorzugten Ausführungsform der erfindungsgemäßen Trockenpräparationen kommen darin Calciumsulfat (Anhydrit), Calciumsulfat-Hemihydrat und/oder Calciumsulfat-Dihydrat und Calciumformiat, vorzugsweise Calciumsulfat (Anhydrit) und Calciumformiat zum Einsatz. In einer weiteren bevorzugten Ausführungsform der erfindungsgemäßen Trockenpräparationen wird die Komponente c) aus Calciumhydroxid, Calciumformiat und Calciumsulfat (Anhydrit), Calciumsulfat-Hemihydrat und/oder Calciumsulfat-Dihydrat, vorzugsweise aus aus Calciumhydroxid, Calciumformiat und Calciumsulfat (Anhydrit) gebildet oder umfasst diese Verbindungen.

Unter den Erdalkalihydroxiden der Komponente c) wird bevorzugt auf Calciumhydroxid zurückgegriffen. Die Komponente c) liegt in den erfindungsgemäßen Trockenpräparationen vorzugsweise in einer Menge im Bereich von 0,2 bis 12,0 Gew.-%, besonders bevorzugt im Bereich von 0,8 bis 10,0 Gew.-% und insbesondere im Bereich von 1,25 bis 7,5 Gew.-% vor, jeweils bezogen auf das Gesamtgewicht der Trockenpräparation.

Sofern vorhanden, liegt Calciumhydroxid in den erfindungsgemäßen Trockenpräparationen vorzugsweise in einer Menge im Bereich von 0,1 bis 4,0 Gew.-%, bevorzugt im Bereich von 0,4 bis 3,0 Gew.-%, besonders bevorzugt im Bereich von 0,6 bis 1,5 Gew.-% und insbesondere im Bereich von 0,7 bis kleiner 1,0 Gew.-% vor.

Sofern in der erfindungsgemäßen Trockenpräparationen zugegen sind, liegen Calciumsulfat (Anhydrit), Calciumsulfat-Hemihydrat, Calciumsulfat-Dihydrat und beliebige Mischungen der vorangehend genannten Calciumsulfate, insbesondere Calciumsulfat (Anhydrit), darin vorzugsweise in einer Menge im Bereich von 0,5 bis 10,0 Gew.-%, besonders bevorzugt im Bereich von 1,0 bis 7,0 Gew.-% und insbesondere im Bereich von 1,5 bis 4,0 Gew.-%, jeweils bezogen auf das Gesamtgewicht der Trockenpräparation, vor.

Calciumchlorid, Calciumnitrat, Calciumformiat, Calciumacetat, Calciumhydrogencarbonat, Calciumbromid, Calciumsulfamat, Calciumoxid, Calciumiodid, Calciumlactat, Calciumpropionat, Calciummethansulfonat, Calciumsilikathydrat, Calciumaluminat, Lithiumcarbonat, Lithiumsulfat, Lithiumacetat, Lithiumsilikat, Natriumcarbonat, Natriumsulfat, Natriumsilikat, Natriumaluminat, Kaliumchlorid, Kaliumsilikat und/oder, insbesondere und, Aluminiumsulfat liegt bzw. liegen in den erfindungsgemäßen Trockenpräparationen bevorzugt in einer Menge im Bereich von 0,2 bis 3,0 Gew.-%, bevorzugt im Bereich von 0,4 bis 2,0 Gew.-% und besonders bevorzugt im Bereich von 0,6 bis 1,5 Gew.-%, jeweils bezogen auf das Gesamtgewicht der Trockenpräparation, vor.

Ferner kann in einer bevorzugten Ausführungsform vorgesehen sein, dass Calciumformiat, sofern vorhanden, liegt in den erfindungsgemäßen Trockenpräparationen bevorzugt in einer Menge im Bereich von 0,2 bis 3,0 Gew.-%, besonders bevorzugt im Bereich von 0,4 bis 2,0 Gew.-% und insbesondere im Bereich von 0,6 bis 1,5 Gew.-%, jeweils bezogen auf das Gesamtgewicht der Trockenpräparation, vorliegt. Durch Zusatz von Calciumchlorid, Calciumnitrat, Calciumformiat, Calciumacetat, Calciumhydrogencarbonat, Calciumbromid, Calciumsulfamat, Calciumoxid, Calciumiodid, Calciumlactat, Calciumpropionat, Calciummethansulfonat, Calciumsilikathydrat, Calciumaluminat, Lithiumcarbonat, Lithiumsulfat, Lithiumacetat, Lithiumsilikat, Natriumcarbonat, Natriumsulfat, Natriumsilikat, Natriumaluminat, Kaliumchlorid, Kaliumsilikat, Aluminiumsulfat und Mischungen hiervon, insbesondere von Calciumformiat, kann das Abbindeverhalten der aus den erfindungsgemäßen Trockenpräparationen erhältlichen wässrigen Zubereitungsmassen nochmals verbessert werden. Auch zeichnen die sich aus diesen wässrigen Zubereitungsmassen zugänglichen Substrate durch eine ausgeprägte Haftzugzugsfestigkeit aus, insbesondere bei noch stets hinreichender Druckfestigkeit.

Geeignetes Körnungsmaterial (Komponente d)) für die erfindungsgemäßen Trockenpräparationen ist dem Fachmann bekannt. Beispielsweise kann hierfür auf Sand, insbesondere Quarzsand und/oder Kalksteinbrechsand, Split und/oder Kalksteinkörnung zurückgegriffen werden.

Für die erfindungsgemäßen Trockenpräparationen kann auf vielfältige Additive (Komponente e)) zurückgegriffen werden. Exemplarisch seien Konservierungsmittel, Dispergierhilfsmittel, Rheologieverbesserer, Abbindeverzögerer, Pigmente, Fasermaterial, Wasserretentionsmittel, Fließmittel und beliebigen Mischungen hiervon genannt. Geeignete Fasermaterialien umfassen zum Beispiel Polyolefinfasern, mineralische Fasern oder deren beliebige Mischungen. Fließmittel sind dem Fachmann grundsätzlich bekannt. Durch den Einsatz von Fließmitteln kann die Konsistenz wässriger Zubereitungsmassen regelmäßig dahingehend verändert werden, dass sie fließfähiger und besser plastisch verformbar werden. Fließmittel basieren nicht selten auf anionischen Polymeren. Geeignete Fließmittel umfassen zweckmäßigerweise solche auf Polycarboxylatether-Basis (PCEs) und auf Basis von Polykondensaten. Als Polykondensat-Fließmittel sind z.B. Fließmittel auf Basis von Melamin-Formaldehyd-Sulfit- und Naphthalin-Sulfonsäure-Formaldehyd-Polykondensaten bekannt. Bei Polykondensaten handelt es sich im Allgemeinen um lineare, anionische Polymere ohne Verzweigungen. Fließmittel auf Polycarboxylatbasis besitzen ähnlich wie die Polykondensat-Fließmittel ein anionisches Rückgrat, haben jedoch zusätzlich nichtionische Seitenketten, z.B. aus Polyethylenglykol, seltener aus einer Mischung aus Polyethylen- und Polypropylenglykol. Durch die Seitenketten kann dem Polycarboxylatether-basierten Fließmittel in der Regel eine kammartige Struktur zugesprochen werden. Ein geeignetes Polycarboxylatether-Fließmittel kann z.B. durch Veresterung von Polymethacrylsäure mit Methoxypolyethylenglycol hergestellt werden.

Gemäß einer weiteren zweckmäßigen Ausführungsform umfassen die erfindungsgemäßen Trockenpräparationen ferner mindestens ein Hydrophobierungsmittel (Komponente f)). Geeignete Hydrophobierungsmittel umfassen Fettalkohole, Fettsäuren, Fettsäureester und/oder Fettsäuresalze oder deren Derivate und deren beliebige Mischungen. Exemplarisch seien Salze und Ester der Stearinsäure genannt. Durch den Einsatz von Hydrophobierungsmitteln gelangt man insbesondere zu solchen ausgehärteten/abgebundenen Substraten, insbesondere Putzbeschichtungen, die nicht nur das in dieser Beschreibung geschilderte vorteilhafte physiko-mechanische Eigenschaftsprofil aufweisen, sondern die darüber hinaus nicht oder nur noch stark verringert zu Ausblühungen neigen. Auch tragen die Hydrophobierungsmittel in den aus den erfindungsgemäßen Trockenpräparationen erhaltenen wässrigen Zubereitungen zu einer schnelleren Aushärtung bei.

Alternativ oder insbesondere zusätzlich kann in den erfindungsgemäßen Trockenpräparationen auch mindestens ein anorganischer Füllstoff, insbesondere Kalksteinmehl, mit verwendet werden (Komponente g)). Hierbei kommt der mindestens eine anorganische Füllstoff, insbesondere Kalksteinmehl, bevorzugt in sehr feinteiliger Form zum Einsatz, insbesondere mit einer durchschnittlichen Partikelgröße (D50) im Bereich von 1 bis 50 µm, bevorzugt im Bereich von 3 bis 30 µm. Überraschenderweise können auch durch den Einsatz dieser feinteiligen anorganischen Füllstoffe, insbesondere dieses sehr feinteiligen Kalksteinmehls, ein beschleunigtes Abbindeverhalten herbeigeführt und akzeptable Haftzugfestigkeitswerte, insbesondere auch bei noch stets hinreichenden Druckfestigkeiten erhalten werden. Die Komponente g), insbesondere Kalksteinmehl, liegt in den erfindungsgemäßen Trockenpräparationen bevorzugt in einer Menge im Bereich von 0,5 bis 30 Gew.-%, besonders bevorzugt im Bereich von 5 bis 25 Gew.-% und insbesondere im Bereich von 10 bis 20 Gew.-%, jeweils bezogen auf das Gesamtgewicht der Trockenpräparation, vor.

In weiteren zweckmäßigen Ausführungsformen umfassen die erfindungsgemäßen Trockenpräparationen ferner mindestens ein organisches Bindemittel, insbesondere Dispersionspulver wie redispergierbare Dispersionspulver (Komponente h)). Geeignete organische Bindemittel können dabei ausgewählt werden aus der Gruppe bestehend aus Vinylacetat-Copolymeren, insbesondere Vinylacetat-Ethylen-Copolymeren, Vinylester-Ethylen-Vinylchlorid-Copolymeren, Vinylversatat/Ethylen-Copolymeren und/oder Vinylacetat/Ethylen/Vinylversatat-Copolymeren; Vinylacetat/Acrylsäureester-Copolymerisaten; Copolymeren auf Basis von Acrylaten und gegebenenfalls Methacrylaten, insbesondere Reinacrylate wie Copolymerisate von Methylmethacrylat mit n-Butylacrylat und/oder 2-Ethylhexylacrylat; Copolymerisaten von Methylmethacrylat mit 1,3-Butadien; Vinylchlorid-Ethylen-Copolymeren; Vinylchlorid/Acrylat-Copolymeren; Copolymeren auf Basis von Vinylaromaten, insbesondere gebildet aus Styrol und (Meth)acrylaten, bevorzugt Styrol-Butadien-Copolymeren und/oder Styrol-Acrylsäureester-Copolymeren; Hybridbindemitteln, insbesondere in Form wässriger Organosilikat-Hybriddispersionen, und beliebigen Mischungen hiervon. Das mindestens eine organische Bindemittel, insbesondere das Dispersionspulver, liegt in den erfindungsgemäßen Trockenpräpationen bevorzugt in einer Menge im Bereich von 0,2 bis 10,0 Gew.-%, besonders bevorzugt in einer Menge im Bereich von 0,5 bis 5,0 Gew.-% und insbesondere im Bereich von 0,6 bis 3,0 Gew.-%, beispielsweise im Bereich von 0,6 bis 1,0 Gew.-%, vor.

Die die erfindungsgemäßen Trockenpräparation bildenden Bestandteile, insbesondere die Komponenten a) bis e) oder a) bis h), können jeweils einzeln in beliebiger Reihenfolge zusammengegeben werden. Alternativ können zwei oder mehrere Komponenten vorgemischt und anschließend mit den weiteren Komponenten vermengt werden. Beispielsweise kann es zweckdienlich sein, Zement (Komponente a)) und calcinierte Tone (Komponente b)) in einem einheitlichen Verfahrensschritt bei der Gewinnung von Zement herzustellen und das hierbei anfallende Gemisch an Zement und calcinierten Tonen als solches für die Bildung der erfindungsgemäßen Trockenpräparationen zu verwenden.

Die der Erfindung zugrunde liegende Aufgabe wird des Weiteren gelöst durch eine wässrige Zubereitungsmasse, insbesondere Putzbeschichtungsmasse, umfassend oder gebildet aus der erfindungsgemäßen Trockenpräparation. Der Wassergehalt dieser wässrigen Zubereitungsmassen liegt bevorzugt im Bereich von 10 bis 50 Gew.-%, besonders bevorzugt im Bereich von 12 bis 40 Gew.-% und insbesondere im Bereich von 15 bis 35 Gew.-%, jeweils bezogen auf das Gesamtgewicht der Zubereitungsmasse, insbesondere Putzbeschichtungsmasse.

Besonders geeignete erfindungsgemäße wässrige Zubereitungsmassen, insbesondere Putzbeschichtungsmassen, verfügen über einen Luftporengehalt im Bereich von 10 bis 30 %, bevorzugt im Bereich von 15 bis 25 %, jeweils bestimmt gemäß DIN 18555-2:1982-09, und/oder, insbesondere und, über eine Nassrohdichte, bestimmt gemäß DIN 18555-2:1982- 09, im Bereich von 1,2 bis 2,0 g/cm³.

Die erfindungsgemäßen wässrigen Zubereitungsmassen, insbesondere Putzbeschichtungsmassen, können eine Unterputzmasse, insbesondere Armierungsputzmasse, eine Oberputzmasse oder eine Klebermasse, insbesondere für Dämmstoffkörper oder Fliesen, darstellen oder Bestandteil hiervon sein.

Die der Erfindung zugrunde liegende Aufgabe wird des Weiteren gelöst durch ein Substrat, insbesondere Putzbeschichtung, gebildet aus der erfindungsgemäßen wässrigen Zubereitungsmasse, insbesondere Putzbeschichtungsmasse. Besonders geeignete erfindungsgemäße Substrate, insbesondere in Form von Putzbeschichtungen, verfügen über eine Trockenrohdichte, bestimmt gemäß DIN 18555-2:1982-09, im Bereich von 1,0 bis 1,5 g/cm³.

Ferner sind mit der vorliegenden Erfindung solche erfindungsgemäßen Substrate, insbesondere Putzbeschichtungen, zugänglich, die eine Biegezugfestigkeit, bestimmt gemäß DIN 196-1:2016-11, im Bereich von 0,7 bis 1,2 N/mm² und/oder, insbesondere und, eine Druckfestigkeit, bestimmt gemäß DIN 196-1:2016-11, im Bereich von 1,0 bis 2,5 N/mm² und/oder, insbesondere und ein Schwindverhalten nach 28 Tagen, bestimmt gemäß DIN 52450-C:1985-08, im Bereich von - 3,5 bis -2,8 mm/m und/oder, insbesondere und, eine kapillare Wasseraufnahme, bestimmt nach DIN EN 1015-18:2003-03, im Bereich von 0,05 bis 1,5 kg/(m² × min^{0,5}) und/oder, insbesondere und, eine Wasseraufnahme nach 24 h, bestimmt nach ETAG 004:2001-02-20, 0,3 bis 0,8 kg/m², aufweisen. Erfindungsgemäße Substrate, insbesondere Putzbeschichtungen, mit einer besonders geringen Schwindung werden bei Verwendung solcher erfindungsgemäßer Trockenpräparationen bzw. wässriger Zubereitungsmassen, insbesondere Putzbeschichtungsmassen, besonders zuverlässig erhalten, die Calciumsulfat (Anhydrit) als Bestandteil der Aktivatormischungen c) enthalten.

Schließlich wird die der Erfindung zugrunde liegende Aufgabe gelöst durch einen Wandaufbau oder Baukörper, insbesondere Wärmedämmverbundsystem, umfassend mindestens ein erfindungsgemäßes Substrat, insbesondere in Form einer erfindungsgemäßen Putzbeschichtung. Die erfindungsgemäßen Wandaufbauten oder Baukörper, insbesondere Wärmedämmverbundsysteme, können in einer zweckmäßigen Ausführungsform ausgestattet sein mit einem Dämmstoffkörper mit einer ersten und einer gegenüberliegenden zweiten Seite mit einer aus der erfindungsgemäßen Klebermasse gebildeten Kleberschicht auf der ersten Seite und mit einer aus der erfindungsgemäßen Unterputzmasse gebildeten Unterputzschicht, insbesondere Armierungsschicht, auf der zweiten Seite. Diese erfindungsgemäßen Wandaufbauten oder Baukörper, insbesondere Wärmedämmverbundsysteme, können des Weiteren auch eine aus der erfindungsgemäßen Oberputzmasse gebildete Oberputzschicht auf einer Unterputz- bzw. Armierungsschicht, insbesondere auf der erfindungsgemäßen Unterputzschicht bzw. der Armierungsschicht, aufweisen. Für besonders vorteilhafte Ausgestaltungen kann vorgesehen sein, dass die für die erfindungsgemäße Klebermasse verwendete erfindungsgemäße Trockenpräparation im Wesentlichen übereinstimmt, insbesondere übereinstimmt, mit die für die erfindungsgemäße Unterputzmasse verwendeten erfindungsgemäßen Trockenpräparation. Hierdurch lassen sich die Arbeitsabläufe an der Baustelle nochmals vereinfachen.

Die erfindungsgemäßen Wandaufbauten oder Baukörper, insbesondere Wärmedämmverbundsysteme, zeichnen sich in einer besonders bevorzugten Ausführungsform durch eine Haftzugfestigkeit aus, bestimmt gemäß DIN EN 1015-12:2016-12 (Prüfverfahren für Mörtel für Mauerwerk - Teil 12: Bestimmung der Haftzugfestigkeit zwischen Putz und Untergrund), die größer oder gleich 50,0 kPa, bevorzugt größer oder gleich 60,0 kPa und besonders größer oder gleich 100,00 kPa, ist. Haftzugfestigkeitswerte größer oder gleich 100,00 kPa stellen sich insbesondere mit der Verwendung von erfindungsgemäßen wässrigen Zubereitungsmassen ein, die mindestens ein Erdalkalihydroxid, insbesondere Calciumhydroxid, und Calciumsulfat (Anhydrit), Calciumsulfat-Hemihydrat und/oder Calciumsulfat-Dihydrat aufweisen, inbesondere Calciumsulfat (Anhydrit), aufweisen, sowie ganz besonders mit solchen erfindungsgemäßen wässrigen Zubereitungsmassen, die mindestens ein Erdalkalihydroxid, insbesondere Calciumhydroxid, mindestens eine Aktivatorverbindung ausgewählt aus der Gruppe bestehend aus Calciumchlorid, Calciumnitrat, Calciumformiat, Calciumacetat, Calciumhydrogencarbonat, Calciumbromid, Calciumsulfamat, Calciumoxid, Calciumiodid, Calciumlactat, Calciumpropionat, Calciummethansulfonat, Calciumsilikathydrat, Calciumaluminat, Lithiumcarbonat, Lithiumsulfat, Lithiumacetat, Lithiumsilikat, Natriumcarbonat, Natriumsulfat, Natriumsilikat, Natriumaluminat, Kaliumchlorid, Kaliumsilikat, Aluminiumsulfat und Mischungen hiervon, insbesondere Calciumformiat, und Calciumsulfat (Anhydrit), Calciumsulfat-Hemihydrat und/oder Calciumsulfat-Dihydrat aufweisen, wobei die Anwesenheit von Calciumhydroxid, Calciumformiat und Calciumsulfat (Anhydrit), Calciumsulfat-Hemihydrat und/oder Calciumsulfat-Dihydrat, insbesondere Anhydrit, besonders bevorzugt ist. Überraschend wurde gefunden, dass sich mit den erfindungsgemäßen Trockenpräparationen wässrige Beschichtungsmassen erhalten lassen, die, insbesondere bei Verwendung von Zement in Mengen kleiner 1,0 Gew.-% und/oder, insbesondere und, von Erdalkalihydroxiden, vorzugsweise Calciumhydroxid, in Mengen kleiner 1,0 Gew.-%, nicht ätzend und nicht reizend sind und die sich durch eine sehr gute CO₂-Bilanz auszeichnen. So geht mit calcinierten Tonen der Vorteil einher, dass deren Herstellung signifikant weniger Kohlendioxid freisetzt als die Herstellung von Zement. Mit den erfindungsgemäßen Trockenpräparationen können bis zu etwa 65 % an CO₂-Emissionen eingespart werden.

Ferner wurde überraschend gefunden, dass mit den erfindungsgemäßen Trockenpräparationen in wässrigen Zubereitungen innerhalb für praktische Anwendungen akzeptablen Zeiträumen eine hinreichende Abbindung gelingt und gute physiko-chemische Eigenschaften für die daraus gebildeten Substrate, insbesondere Putzbeschichtungen, und Wandaufbauten oder Baukörper, insbesondere Wärmedämmverbundsysteme, erhalten werden, obwohl Zement (Komponente a)) in den Trockenpräparationen nur in einer Menge kleiner 1,25 Gew.-% oder kleiner 1,0 Gew.-%, bevorzugt im Bereich von 0,25 bis 1,1 Gew.-% und besonders bevorzugt im Bereich von 0,4 bis kleiner 1,0 Gew.-%, bezogen auf das Gesamtgewicht der Trockenpräparation, vorliegt. Ohne an eine Theorie gebunden zu sein, wird vermutet, dass dies auf die gleichzeitige Anwesenheit von calcinierten Tonen (Komponente b)) und Aktivatoren gemäß Komponente c) zurückzuführen ist. Durch die Substitution von Zement mit calcinierten Tonen, kombiniert mit dem Einsatz einer Mischung an ausgewählten Calciumverbindungen, lässt sich ein für alle praktischen Anwendungen zufriedenstellendes physikalisch-mechanisches und chemisches Eigenschaftsprofil erzielen, beispielsweise hinsichtlich Abbindeverhalten und Haftzugfestigkeitswerten, das an das von herkömmlichen Zement-basierten Zusammensetzungen heranreicht. Auch können noch stets für viele praktische Anwendungen akzeptable Druckfestigkeitswerte erhalten werden.

Nachfolgend wird die erfindungsgemäße Beschichtungsmasse anhand von Beispielen dargestellt, ohne dass hierdurch die allgemeine Aussage der zugrunde liegenden technischen Lehre in irgendeiner Weise eingeschränkt werden soll.

### Beispiele:

Die die erfindungsgemäßen wie auch die die nicht-erfindungsgemäßen Trockenpräparationen bildenden Komponenten (A) wurden auf für den Fachmann bekannte Weise mit Wasser (B) im Gewichtsverhältnis (A:B) 10 zu 3 zu einer im Wesentlichen homogen vermengten wässrigen Zubereitungsmasse verarbeitet. Diese Zubereitungsmassen wurden auf eine Betonplatte aufgebracht. In die frisch aufgebrachten Zubereitungsmassen wurde jeweils ein Ausschnitt einer EPS-Dämmplatte (10 cm × 10 cm) eingedrückt. Nach sieben Tagen wurden diese Probenkörper auf ihre Haftzugfestigkeit gemäß DIN EN 1015-12:2016-12 (Prüfverfahren für Mörtel für Mauerwerk - Teil 12: Bestimmung der Haftzugfestigkeit zwischen Putz und Untergrund) untersucht (siehe Proben Nr. 1 bis 6 in Tabelle 1).

Diese Trockenpräparationen hatten die der nachfolgenden Tabelle zu entnehmende Zusammensetzung:

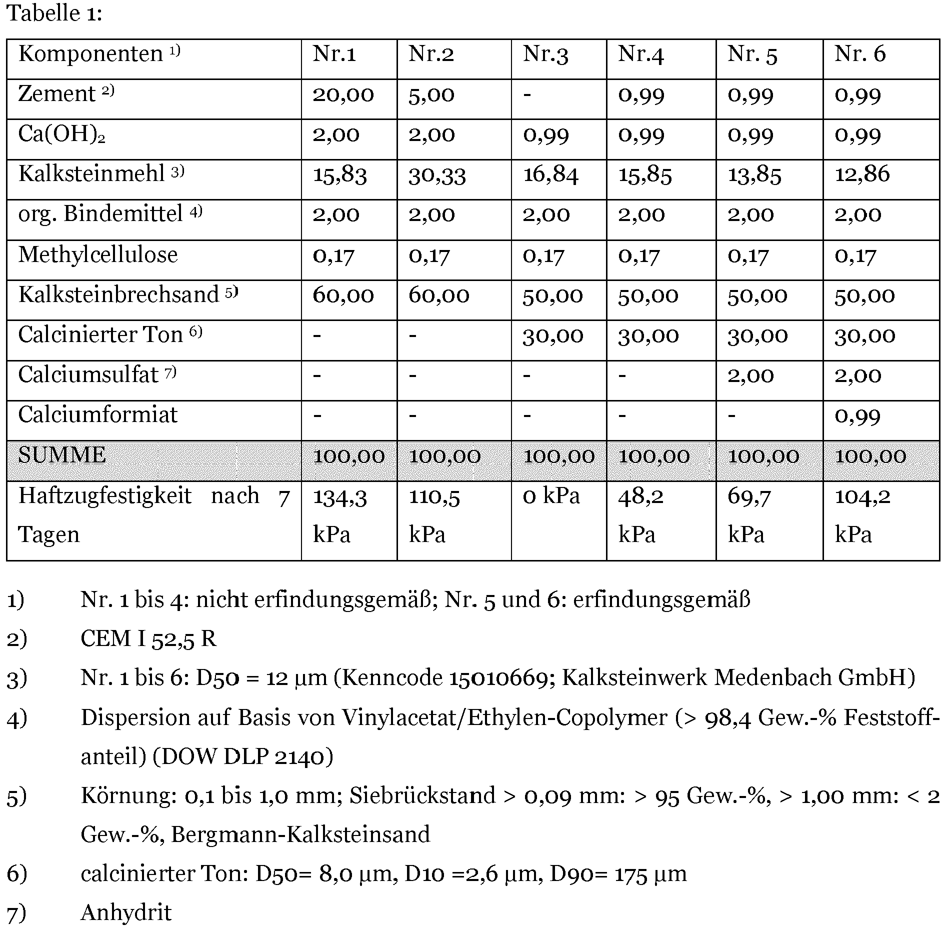

Die erfindungsgemäßen Substrate wiesen, obwohl mit weniger als 1,0 Gew.-% Zement auskommend, hinsichtlich Haftzugfestigkeit physiko-mechanische Eigenschaften auf, die an die von Substraten heranreichten, die keine calcinierten Tone enthielten, sondern Mengen an Zement, die signifikant oberhalb von 1,0 Gew.-% lagen (siehe Beispiele Nr. 1 und 2). Vielfach wurde sogar ein Kohäsionsbruch in der EPS-Platte beobachtet.

Die Zubereitungsmassen gemäß den Proben Nr. 7 und Nr. 8 (siehe Tabelle 2) wurden hinsichtlich ihrer Wärmeentwicklung untersucht. Konkret wurde die Entwicklung der Hydratationswärme, und damit einhergehend die Ausprägung der Aktivierung mittels Wärmeflusskalorimetrie bestimmt. Hierbei kam ein TamAir-Kalorimeter der Firma TA Instruments (Baujahr 2020) zum Einsatz. Unmittelbar nach dem Anrühren mit Wasser wurden hiervon jeweils 10 g in Messampullen eingetragen, welche sodann luftdicht verschlossen und bei 23 ± 0,1°C vermessen wurden. Die Umgebungstemperatur betrug 23°C ± 2°C.

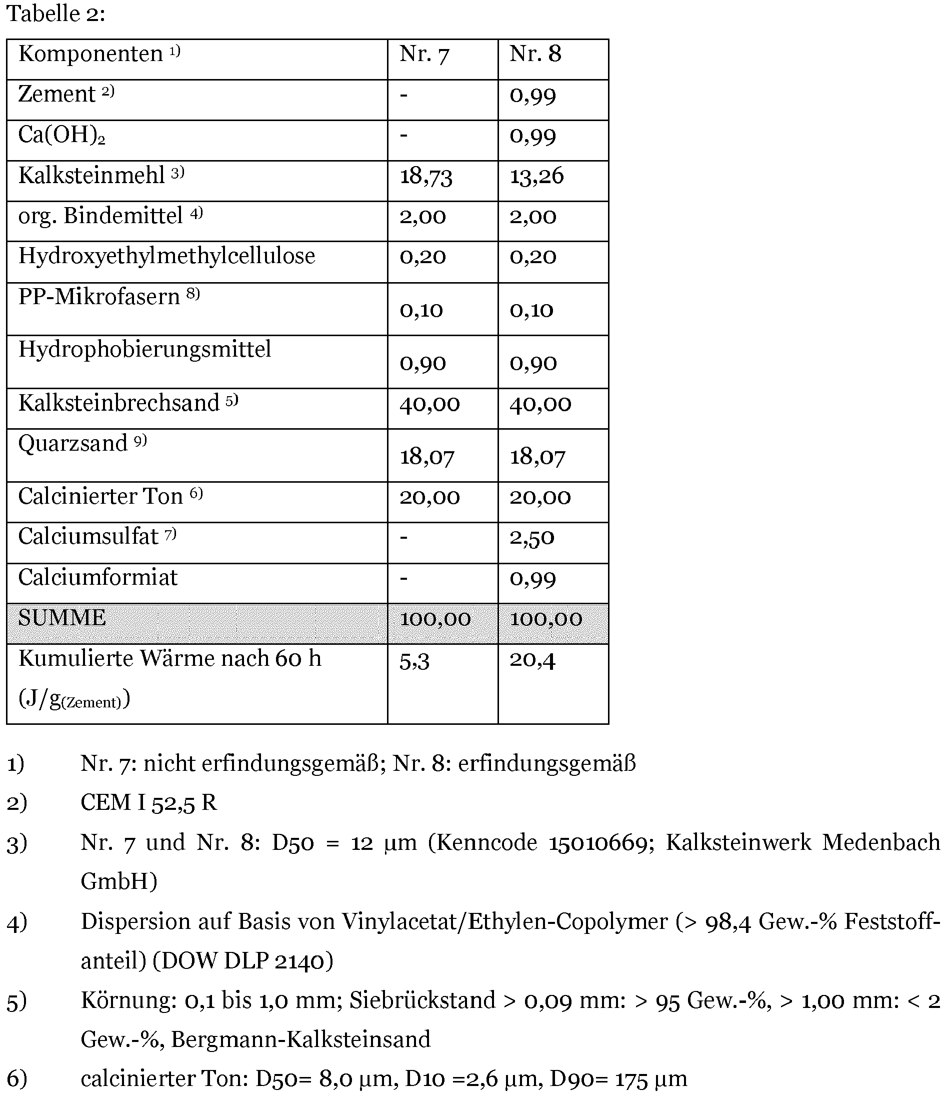

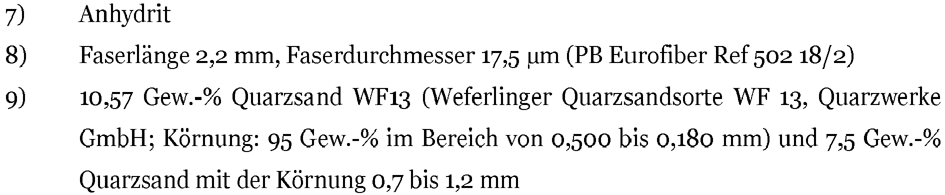

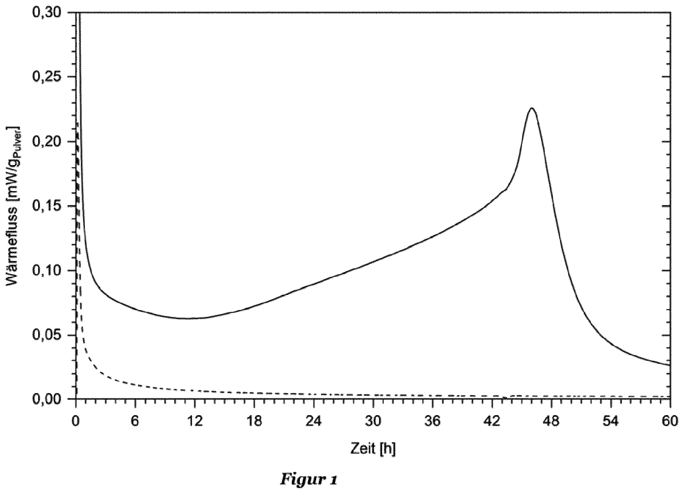

Bei der Probe Nr. 8 zeigte sich eine merkliche Zunahme der Wärmeentwicklung beginnend nach 12 h, wobei die Wärmeentwicklung am stärksten zwischen 42 und 50 h ausgeprägt war. Es war ein deutlicher Peak im Wärmeflussdiagramm zu erkennen. Diesbezügliche Details sind der Figur 1 zu entnehmen.

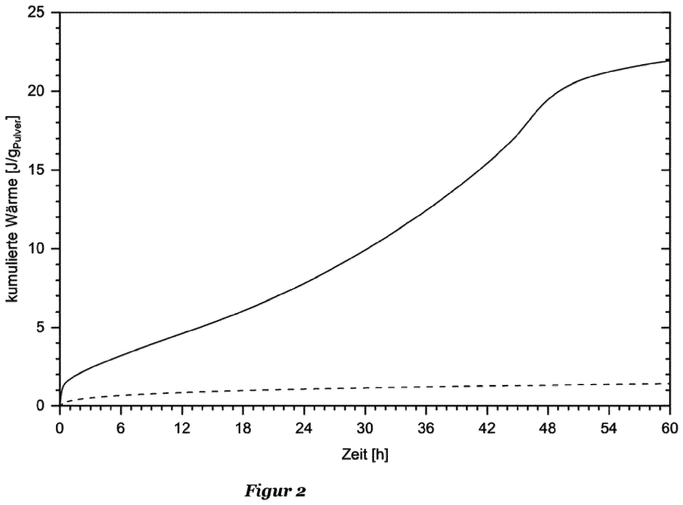

Die Probe Nr. 7 zeigten keine merkliche Wärmeentwicklung, insbesondere war kein Wärmeentwicklungspeak zu irgendeinem Zeitpunkt erkennbar. Diesbezügliche Details sind der Figur 2 zu entnehmen.

Mit den erfindungsgemäßen Zusammensetzungen war es folglich möglich, in für den Fachmann praktikablen Zeiträumen auf bei Einsatz nur geringer Mengen an Zement zu ausgehärteten Bauteilen zu gelangen, die hinreichend abgebunden sind und die sich durch eine zufriedenstellende Haftzugfestigkeit auszeichnen.

Schließlich wurden auch für eine nicht erfindungsgemäße Trockenpräparation (siehe Formulierung Nr. 9 in der nachfolgenden Tabelle 3) sowie für eine erfindungsgemäße Trockenpräparation (siehe Formulierung Nr. 10 in der nachfolgenden Tabelle 3) der jeweilige "CO₂-Fußabdruck", d.h. das *Global Warming* Potential, welches die Zusammenfassung aller Treibhausgasemissionen und Angaben in CO₂-Äquivalenten beinhaltet, mit dem sogenannten CEPE Eco footprint tool 2016 erstellt (siehe www.CEPE.org/ecofootprint). Soweit von den Zulieferern der jeweiligen Komponenten präzisere Daten zum CO₂-Ausstoß zur Verfügung gestellt wurden, wurde allerdings diese verwendet.

**Tabelle 3:**

| **Komponenten (Gew.-%) ¹⁾** | **Nr. 9** | **Nr. 10** |
|---|---|---|
| Zement CEM I 42,5 N | 20,00 | 0,99 |
| Calciumcarbonat | 57,00 | 53,32 |
| Calciumhydroxid | 2,00 | 0,99 |
| Quarzsand ⁵⁾ | 18,20 | 18,10 |
| Org. Bindemittel ³⁾ | 2,20 | 2,00 |
| Bentonit -Verdicker | 0,10 | - |
| Cellulose- Verdicker | 0,20 | 0,20 |
| | | |
| Calciumformiat | - | 0,9 |
| Hydrophobierungsmittel ⁴⁾ | 0,2 | 0,9 |
| Calcinierter Ton ²⁾ | - | 20,00 |
| Anhydrit | | 2,50 |
| Cellulosefasern | 0,10 | 0,10 |
| | | |
| "CO₂-Fußabdruck" (kg_{CO2}/kg_{Produkt}) | 311 | 228 |
| CO₂-Einsparung | 0 | - 26,7% |

| | | |
|---|---|---|
| 1) Nr. 9: nicht erfindungsgemäß; Nr. 10: erfindungsgemäß 2) calcinierter Ton: D50= 8,0 µm, D10 =2,6 µm, D90= 175 µm 3) Vinylacetat/Ethylen-Copolymer (> 98,4 Gew.-% Feststoffanteil) (DOW DLP 2140) 4) Mischung aus Alkali-, Erdalkali- und Zinkseifen (Ligaphob NF 50) 5) Körnung: 95 Gew.-% im Bereich von 0,500 bis 0,180 mm (Weferlinger Quarzsandsorte WF 13, Quarzwerke GmbH) | | |

Mit der erfindungsgemäßen Trockenpräparation kann der Ausstoß von Kohlendioxid merklich verringert werden.

Die in der voranstehenden Beschreibung und den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Trockenpräparation für eine Beschichtungsmasse, umfassend oder bestehend aus
a) Zement, insbesondere umfassend oder bestehend aus Zement gemäß DIN EN 197-1:2011-11, in einer Menge kleiner 1,25 Gew.-%, bevorzugt im Bereich von 0,25 bis 1,1 Gew.-% und besonders bevorzugt im Bereich von 0,4 bis kleiner 1,0 Gew.-%, bezogen auf das Gesamtgewicht der Trockenpräparation,
b) calcinierten Tonen in einer Menge im Bereich von 5 bis 60 Gew.-%, bezogen auf das Gesamtgewicht der Trockenpräparation,
c) Aktivatoren, umfassend
i) mindestens ein Erdalkalihydroxid, insbesondere Calciumhydroxid, und Calciumsulfat (Anhydrit), Calciumsulfat-Hemihydrat und/oder Calciumsulfat-Dihydrat, insbesondere Calciumsulfat (Anhydrit), oder
ii) mindestens ein Erdalkalihydroxid, insbesondere Calciumhydroxid, und mindestens eine Aktivatorverbindung ausgewählt aus der Gruppe bestehend aus Calciumchlorid, Calciumnitrat, Calciumformiat, Calciumacetat, Calciumhydrogencarbonat, Calciumbromid, Calciumsulfamat, Calciumoxid, Calciumiodid, Calciumlactat, Calciumpropionat, Calciummethansulfonat, Calciumsilikathydrat, Calciumaluminat, Lithiumcarbonat, Lithiumsulfat, Lithiumacetat, Lithiumsilikat, Natriumcarbonat, Natriumsulfat, Natriumsilikat, Natriumaluminat, Kaliumchlorid, Kaliumsilikat, Aluminiumsulfat und Mischungen hiervon, insbesondere Calciumformiat, oder
iii) Calciumsulfat (Anhydrit), Calciumsulfat-Hemihydrat und/oder Calciumsulfat-Dihydrat, insbesondere Calciumsulfat (Anhydrit), und mindestens eine Aktivatorverbindung ausgewählt aus der Gruppe bestehend aus Calciumchlorid, Calciumnitrat, Calciumformiat, Calciumacetat, Calciumhydrogencarbonat, Calciumbromid, Calciumsulfamat, Calciumoxid, Calciumiodid, Calciumlactat, Calciumpropionat, Calciummethansulfonat, Calciumsilikathydrat, Calciumaluminat, Lithiumcarbonat, Lithiumsulfat, Lithiumacetat, Lithiumsilikat, Natriumcarbonat, Natriumsulfat, Natriumsilikat, Natriumaluminat, Kaliumchlorid, Kaliumsilikat, Aluminiumsulfat und Mischungen hiervon, insbesondere Calciumformiat, oder
iv) mindestens ein Erdalkalihydroxid, insbesondere Calciumhydroxid, mindestens eine Aktivatorverbindung ausgewählt aus der Gruppe bestehend aus Calciumchlorid, Calciumnitrat, Calciumformiat, Calciumacetat, Calciumhydrogencarbonat, Calciumbromid, Calciumsulfamat, Calciumoxid, Calciumiodid, Calciumlactat, Calciumpropionat, Calciummethansulfonat, Calciumsilikathydrat, Calciumaluminat, Lithiumcarbonat, Lithiumsulfat, Lithiumacetat, Lithiumsilikat, Natriumcarbonat, Natriumsulfat, Natriumsilikat, Natriumaluminat, Kaliumchlorid, Kaliumsilikat, Aluminiumsulfat und Mischungen hiervon, insbesondere Calciumformiat, und Calciumsulfat (Anhydrit), Calciumsulfat-Hemihydrat und/oder Calciumsulfat-Dihydrat, insbesondere Calciumsulfat (Anhydrit),
d) mindestens einem Körnungsmaterial und
e) mindestens einem Additiv,
wobei die die Trockenpräparation bildenden Komponenten sich stets zu 100,0 Gew.-% addieren.

2. Trockenpräparation nach Anspruch 1, ferner umfassend
f) mindestens ein Hydrophobierungsmittel und/oder, insbesondere und,
g) mindestens einen anorganischen Füllstoff, insbesondere Kalksteinmehl.

3. Trockenpräparation nach Anspruch 1 oder 2, ferner umfassend
h) mindestens ein organisches Bindemittel, insbesondere Dispersionspulver wie redispergierbare Dispersionspulver, bevorzugt in einer Menge im Bereich von 0,2 bis 10 Gew.-%, besonders bevorzugt im Bereich von 0,5 bis 5,0 Gew.-%, beispielsweise im Bereich von 0,6 bis 3,0 Gew.-%.

4. Trockenpräparation nach einem der vorangehenden Ansprüche, **dadurch gekennzeichnet, dass**
das mindestens eine Erdalkalihydroxid Calciumhydroxid darstellt und/oder, insbesondere und, die mindestens eine Aktivatorverbindung Calciumformiat darstellt.

5. Trockenpräparation nach einem der vorangehenden Ansprüche, **dadurch gekennzeichnet, dass**
die Komponente c) darin in einer Menge im Bereich von 0,2 bis 12,0 Gew.-%, bevorzugt im Bereich von 0,8 bis 10,0 Gew.-% und besonders bevorzugt im Bereich von 1,25 bis 7,5 Gew.-% vorliegt, jeweils bezogen auf das Gesamtgewicht der Trockenpräparation.

6. Trockenpräparation nach einem der vorangehenden Ansprüche, **dadurch gekennzeichnet, dass**
das mindestens eine Erdalkalihydroxid der Komponente c), insbesondere Calciumhydroxid, darin in einer Menge im Bereich von 0,1 bis 4,0 Gew.-%, bevorzugt im Bereich von 0,4 bis 3,0 Gew.-%, besonders bevorzugt im Bereich von 0,6 bis 1,5 Gew.-% und ganz besonders bevorzugt im Bereich von 0,7 bis kleiner 1,0 Gew.-% vorliegt, jeweils bezogen auf das Gesamtgewicht der Trockenpräparation, und/oder, insbesondere und,
die mindestens eine Aktivatorverbindung der Komponente c), insbesondere Calciumformiat, darin in einer Menge im Bereich von 0,2 bis 3,0 Gew.-%, bevorzugt im Bereich von 0,4 bis 2,0 Gew.-%, besonders bevorzugt im Bereich von 0,6 bis 1,5 Gew.-% und ganz besonders bevorzugt im Bereich von 0,7 bis kleiner 1,0 Gew.-% vorliegt, jeweils bezogen auf das Gesamtgewicht der Trockenpräparation, und/oder, insbesondere und,
das Calciumsulfat (Anhydrit), Calciumsulfat-Hemihydrat und/oder Calciumsulfat-Dihydrat der Komponente c), insbesondere Calciumsulfat (Anhydrit), darin in einer Menge im Bereich von 0,5 bis 10,0 Gew.-%, bevorzugt im Bereich von 1,0 bis 7,0 Gew.-% und besonders bevorzugt im Bereich von 1,5 bis 4,0 Gew.-% vorliegt, jeweils bezogen auf das Gesamtgewicht der Trockenpräparation.

7. Trockenpräparation nach einem der vorangehenden Ansprüche, **dadurch gekennzeichnet, dass**
die calcinierten Tone auf Zweischichtsilikaten, insbesondere auf Schichtsilikaten der Kaolin- und/oder Serpentin-Gruppe, Dreischichtsilikaten, insbesondere Glimmer, Illit, Smectit und/oder Montmorillonit, und/oder Vierschichtsilikaten, insbesondere auf Schichtsilikaten der Chlorit-Gruppe, basieren.

8. Trockenpräparation nach einem der vorangehenden Ansprüche, **dadurch gekennzeichnet, dass**
die Komponente b), insbesondere calcinierte Tone auf Basis von Kaolinit und/oder Montmorillonit, darin in einer Menge im Bereich von 5 bis 50 Gew.-%, bevorzugt im Bereich von 10 bis 40 Gew.-% und besonders bevorzugt im Bereich von 15 bis 35 Gew.-% vorliegt, jeweils bezogen auf das Gesamtgewicht der Trockenpräparation.

9. Trockenpräparation nach einem der Ansprüche 2 bis 8, **dadurch gekennzeichnet, dass**
die Komponente g), insbesondere Kalksteinmehl, darin in einer Menge im Bereich von 0,5 bis 30 Gew.-%, bevorzugt im Bereich von 5 bis 25 Gew.-% und besonders bevorzugt im Bereich von 10 bis 20 Gew.-% vorliegt, jeweils bezogen auf das Gesamtgewicht der Trockenpräparation, und/oder, insbesondere und, dass die Komponente g), insbesondere Kalksteinmehl, einen D50-Wert im Bereich von 1 bis 50 µm, bevorzugt im Bereich von 3 bis 30 µm, aufweist.

10. Trockenpräparation nach einem der vorangehenden Ansprüche, **dadurch gekennzeichnet, dass**
die calcinierten Tone einen D50-Wert im Bereich von 25 bis 125 µm, bevorzugt im Bereich von 50 bis 100 µm, und gegebenenfalls einen D90-Wert im Bereich von 400 bis 1500 µm, bevorzugt im Bereich von 750 bis 1250 µm, und/oder einen D10-Wert im Bereich von 1 bis 20 µm, bevorzugt im Bereich von 2 bis 10 µm, aufweisen oder dass
die calcinierten Tone einen D50-Wert im Bereich von 2 bis 20 µm, bevorzugt im Bereich von 4 bis 15 µm, und gegebenenfalls einen D90-Wert im Bereich von 100 bis 300 µm, bevorzugt im Bereich von 150 bis 250 µm, und/oder einen D10-Wert im Bereich von 0,5 bis 10 µm, bevorzugt im Bereich von 1 bis 5 µm, aufweisen.

11. Wässrige Zubereitungsmasse, insbesondere Putzbeschichtungsmasse, umfassend oder gebildet aus einer Trockenpräparation nach einem der vorangehenden Ansprüche und Wasser.

12. Wässrige Zubereitungsmasse, insbesondere Putzbeschichtungsmasse, nach Anspruch 11, **gekennzeichnet durch**
einen Wassergehalt im Bereich von 10 bis 50 Gew.-%, bevorzugt im Bereich von 12 bis 40 Gew.-% und besonders bevorzugt im Bereich von 15 bis 35 Gew.-%, jeweils bezogen auf das Gesamtgewicht der Zubereitungsmasse.

13. Wässrige Zubereitungsmasse, insbesondere Putzbeschichtungsmasse, nach einem der Ansprüche 11 bis 12, **dadurch gekennzeichnet, dass**
diese eine Unterputzmasse, insbesondere Armierungsputzmasse, oder eine Oberputzmasse, insbesondere für Dämmstoffkörper oder Fliesen, darstellt oder Bestandteil hiervon ist.

14. Wässrige Zubereitungsmasse, insbesondere Putzbeschichtungsmasse, nach einem der Ansprüche 11 bis 12, **dadurch gekennzeichnet, dass**
diese eine Klebermasse, insbesondere für Dämmstoffkörper oder Fliesen, darstellt oder Bestandteil hiervon ist.

15. Substrat, insbesondere Putzbeschichtung, gebildet aus der wässrigen Zubereitungsmasse, insbesondere Putzbeschichtungsmasse, nach einem der Ansprüche 11 bis 14, insbesondere **gekennzeichnet durch**
eine Trockenrohdichte, bestimmt gemäß DIN 18555-3:1982-09, im Bereich von 1,0 bis 1,5 g/cm³ und/oder, insbesondere und, durch
eine Biegezugfestigkeit, bestimmt gemäß DIN 196-1:2016-11, im Bereich von 0,7 bis 1,2 N/mm², und/oder, insbesondere und,
eine Druckfestigkeit, bestimmt gemäß DIN 196-1:2016-11, im Bereich von 1,0 bis 2,5 N/mm², und/oder, insbesondere und,
ein Schwindverhalten nach 28 Tagen, bestimmt gemäß DIN 52450-0:1985-08, im Bereich von - 3,5 bis -2,8 mm/m, und/oder, insbesondere und,
eine kapillare Wasseraufnahme, bestimmt nach DIN EN 1015-18:2003-03, im Bereich von 0,05 bis 1,5 kg/(m² × min^{0,5}) und/oder, insbesondere und,
eine Wasseraufnahme nach 24 h, bestimmt nach ETAG 004:2001-02-20, 0,3 bis 0,8 kg/m².

16. Wandaufbau oder Baukörper, insbesondere Wärmedämmverbundsystem, umfassend mindestens ein Substrat, insbesondere eine Putzbeschichtung, nach Anspruch 15.

17. Wandaufbau oder Baukörper, insbesondere Wärmedämmverbundsystem, nach Anspruch 16, umfassend
einen Dämmstoffkörper mit einer ersten und einer gegenüberliegenden zweiten Seite mit einer aus der Klebermasse gemäß Anspruch 14 gebildeten Kleberschicht auf der ersten Seite und mit einer aus der Unterputzmasse gemäß Anspruch 13 gebildeten Unterputzschicht, insbesondere Armierungsschicht, auf der zweiten Seite sowie gegebenenfalls mit einer aus der Oberputzmasse gemäß Anspruch 13 gebildeten Oberputzschicht auf der Unterputzschicht bzw. der Armierungsschicht.

18. Wandaufbau oder Baukörper, insbesondere Wärmedämmverbundsystem, nach Anspruch 16 oder 17, **dadurch gekennzeichnet, dass**
die für die Klebermasse gemäß Anspruch 14 verwendete Trockenpräparation gemäß einem der Ansprüche 1 bis 10 im Wesentlichen übereinstimmt, insbesondere übereinstimmt, mit die für die Unterputzmasse gemäß Anspruch 13 verwendeten Trockenpräparation gemäß einem der Ansprüche 1 bis 10.

19. Wandaufbau oder Baukörper, insbesondere Wärmedämmverbundsystem, nach einem der Ansprüche 16 bis 18, **dadurch gekennzeichnet, dass**
die Haftzugfestigkeit, bestimmt gemäß DIN EN 1015-12:2016-12 (Prüfverfahren für Mörtel für Mauerwerk - Teil 12: Bestimmung der Haftzugfestigkeit zwischen Putz und Untergrund), größer oder gleich 50,0 kPa, bevorzugt größer oder gleich 60,0 kPa und besonders größer oder gleich 100,00 kPa, ist.

20. Verwendung der wässrigen Zubereitungsmasse nach einem der Ansprüche 11 bis 14 als Unterputzmasse, insbesondere Armierungsputzmasse, oder als Oberputzmasse oder als Klebermasse, insbesondere für Dämmstoffkörper oder Fliesen.
